# EUROPÄISCHE PATENTSCHRIFT

(11) **EP 2 580 102 B1**
(45) Veröffentlichungstag und Bekanntmachung des Hinweises auf die Patenterteilung: **25.03.2015**
(21) Anmeldenummer: 11746433.9
(22) Anmeldetag: 10.06.2011
(51) Int. Cl.: B62D 1/16, B62D 33/073

(54) **LENKUNGSDURCHFÜHRUNG FÜR MILITÄRISCHES FAHRZEUG**
STEERING BUSHING FOR A MILITARY VEHICLE
TRAVERSÉE DE DIRECTION POUR VÉHICULE MILITAIRE

(30) Priorität: 11.06.2010 DE 102010023428
(43) Veröffentlichungstag der Anmeldung: 17.04.2013
(73) Patentinhaber: Rheinmetall MAN Military Vehicles GmbH, 80995 München (DE)
(72) Erfinder: ZERETZKE, Norbert, 37235 Hessisch Lichtenau (DE); MIETZNER, Mirko, 34119 Kassel (DE); ZERR, Viktor, 34253 Lohfelden (DE); LANGE, Karl-Josef, 99974 Ammern (DE)
(74) Vertreter: Dietrich, Barbara
(86) Internationale Anmeldenummer: PCT/EP2011/002872
(87) Internationale Veröffentlichungsnummer: WO 2011/154154

(56) Entgegenhaltungen:
- EP-A1- 2 159 532
- WO-A1-2007/042859

## Beschreibung

Die Erfindung beschäftigt sich mit einer Lenkungsdurchführung bzw. Lenksäulendurchführung für insbesondere militärische Fahrzeuge sowie der Lösung der Problematik, dass diese geschützt auszuführen ist, aber das Fahrerhaus derartiger Fahrzeuge nach vorne klappbar sein muss.

Derartige Fahrzeuge zeichnen sich dadurch aus, dass insbesondere für Wartungs- und Reparaturzwecken die Fahrerkabine nach vorne verschwenkbar sein muss (DE 20 2006 003 506 U1). Mit dem Verschwenken muss aber auch das Steuerrad mit nach oben geschwenkt werden. Das verlangt, dass die Lenksäule mit bewegt werden muss. In der Regel beschreibt die Gelenkwelle eine Relativbewegung zum Boden. Diverse teleskopartige Lenksäulen sind aus der DD 264 894 A1, EP 1 506 110 B1 oder DE 11 2005 001 240 T5 bekannt.

Bei Fahrzeugen wird eine Lenkstange oder Lenksäule eines einem im Fahrzeug eingebundenen Lenkrad mit einem außerhalb des Fahrzeuges befindlichen Lenkgetriebe oder -gestänge verbunden. Die Öffnung im Fahrzeugboden ist dabei größer als der Durchmesser der Lenksäule, sodass keine hermetische Dichte gegenüber dem Fahrzeuginnenraum einstellt. Daraus ergibt sich bei militärischen Fahrzeugen die Zusatzforderung, dass diese Öffnungen gegenüber äußeren Blasteinwirkungen und damit verbunden gegen Eindringen von Dreck, Steine etc., geschützt werden muss, da durch dieses Langloch Blast eindringen kann und den Faltenbalg zerstören, wodurch Druck, Gase und Splitter nunmehr eindringen und die Besatzung gefährden kann.

Aus der EP 2 159 532 A1 ist eine Lenkdurchführung bekannt, die eine durch eine Öffnung des Fahrzeugbodens hin und her bewegbar nach außen geführte Lenkstange umfasst. Die Öffnung selbst ist gegen äußere Blastwirkungen derart geschützt, dass ein Schutzelement mit der Lenkstange gekoppelt ist, wodurch die Öffnung unabhängig von der Bewegung der Lenkstange stets verschlossen ist.

Dieser Vorschlag reicht jedoch für Lenkungsdurchführungen, die mit einer Fahrzeugkabine verschwenkbar sein müssen, nicht aus, da beim Kippen des Fahrerhauses die Lenksäule eine Schnittbewegung durch den Fahrzeugboden macht, der sich seinerseits anhebt, wobei das Lenkgetriebe dabei an einem festen Platz bleibt. Da der Drehpunkt des Fahrerhauses als auch der Drehpunkt des Kreuzgelenkes der Lenksäule zum Lenkgetriebe auseinander liegen bzw. nicht auf einer Achse, kommt es zu diesem Schnitt. Diese Situation wird durch eine größere Öffnung - Langloch - gelöst, was jedoch eine ungeschützte Konstruktion mit sich bringt, wenngleich sich oberhalb des Fahrzeugbodens um die Lenksäule herum ein Faltenbalg befindet.

Hier stellt sich die Erfindung die Aufgabe, eine Möglichkeit aufzuzeigen, die bei sicherem Schutz gegen Blast etc., auch ein Verschwenken einer Fahrerkabine ermöglicht.

Gelöst wird die Aufgabe durch die Merkmale des Patentanspruchs 1. Vorteilhafte Ausgestaltungen sind den Unteransprüchen entnehmbar.

Ausgehend von der Anforderung, dass das Langloch sowohl für die Kippung notwendigen Freigänge freigeben als auch die Relativbewegungen der elastischen Lagerung des Fahrerhauses sowie Toleranzen aufnehmen muss, liegt der Erfindung eine einfache Idee zugrunde, nämlich eine Abdeckung des Langlochs (Öffnung) im Boden vorzunehmen und den Zwischenraum zwischen Abdeckplatte und Fahrerhausboden als auch den Durchbruch selbst abzudichten, sodass kein Blast, keine Splitter oder Geschosse ins Innere des Fahrzeughauses eindringen können.

Die unter dem Fahrzeug befindliche Abdeckplatte wird beim Kippen des Fahrerhauses nicht mit gekippt sondern verbleibt im Bereich des Lenkgetriebes, sie bleibt somit liegen bzw. stehen. Nach dem Zurückkippen des Fahrzeughauses liegt die Platte wieder an und wird gegen das Fahrzeughaus bevorzugt gasabgedichtet. Das ermöglicht, dass dieser Bereich aus ABC-geschützt werden kann. Die Bewegungen des Fahrerhauses in den elastischen Lagern, relativ zum Leiterrahmen des Fahrzeugs, macht die Abdeckplatte mit.

Der Vorteil dieser Idee liegt darin, dass durch einfache Maßnahmen, die zudem nachrüstbar sind, das notwendige Langloch zumindest minensicher abgedeckt wird. Es werden keine Querkräfte auf die Lenksäule aufgebracht. Der Durchbruch selbst wird nach innen abgedichtet. Der funktionsnotwendige Freigang, durch den Blast eintreten könnte, wird so stark reduziert, dass eine Drosselwirkung entsteht. Der Restblast kann hier durch einen speziellen Faltenbalg aufgenommen werden, der sich dadurch auszeichnet, dass dieser Aramid verstärkt ist.

In einer weiteren Ausführung kann in im Bereich der Getriebeeinheit zusätzlich ein Schirmblech eingebunden werden.

Vorgeschlagen wird somit eine Lenkungsdurchführung für eine Lenksäule, die durch eine Öffnung des Fahrerhausbodens hindurch mit dem Lenkgetriebe funktional verbunden ist. Dazu ist unterhalb der Öffnung eine gegenüber einem kippbaren Fahrerhaus positionsstabile Abdeckplatte mit einer Durchführung für die Lenksäule als Teil des Lenksäulenschutzes angeordnet. Der vollständige Lenksäulenschutz besteht aus der, die Öffnung nach unten schließende, gegenüber dem Fahrerhausboden positionsstabile Abdeckplatte, einem ersten Faltenbalg, der von oben gesehen über die gesamte Öffnung um die Lenksäule gezogen oder angeordnet ist, sowie einem zweiten Faltenbalg, der in die Öffnung ragend unterhalb des ersten Faltenbalgs angeordnet an der Abdeckplatte die Durchführung abdichtend angebracht ist.

Anhand eines Ausführungsbeispiels mit Zeichnung soll die Erfindung näher erläutert werden. Es zeigt:
- Fig. 1: eine Seitendarstellung des angedeuteten Fahrzeughauses in Nullstellung von links,
- Fig. 2: eine Schnittansicht in Kippstellung von links,
- Fig. 3: eine leicht vergrößerte Darstellung aus Fig. 2,
- Fig. 4: eine Ansicht seitlich mit Darstellung einer Federeinrichtung.

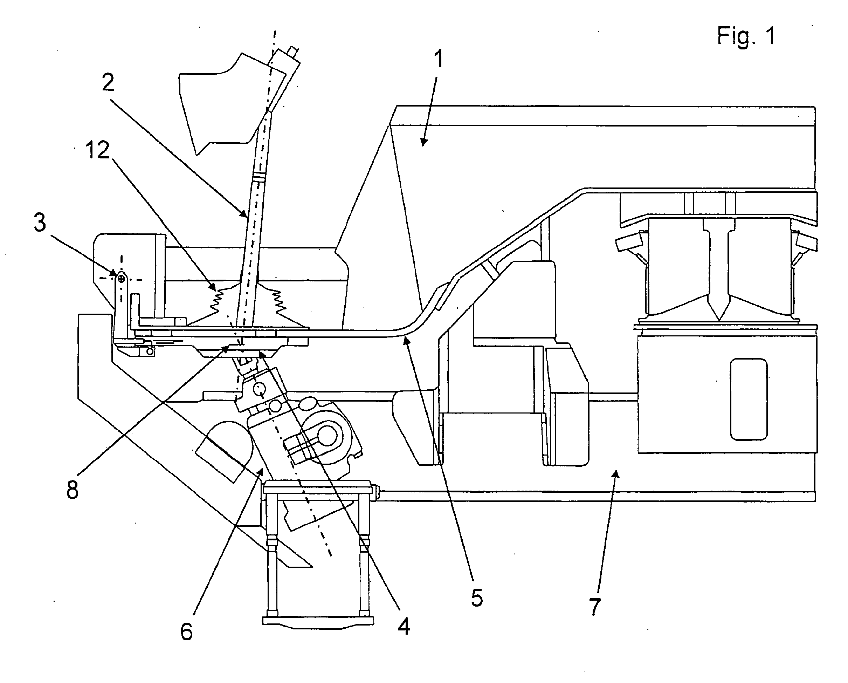

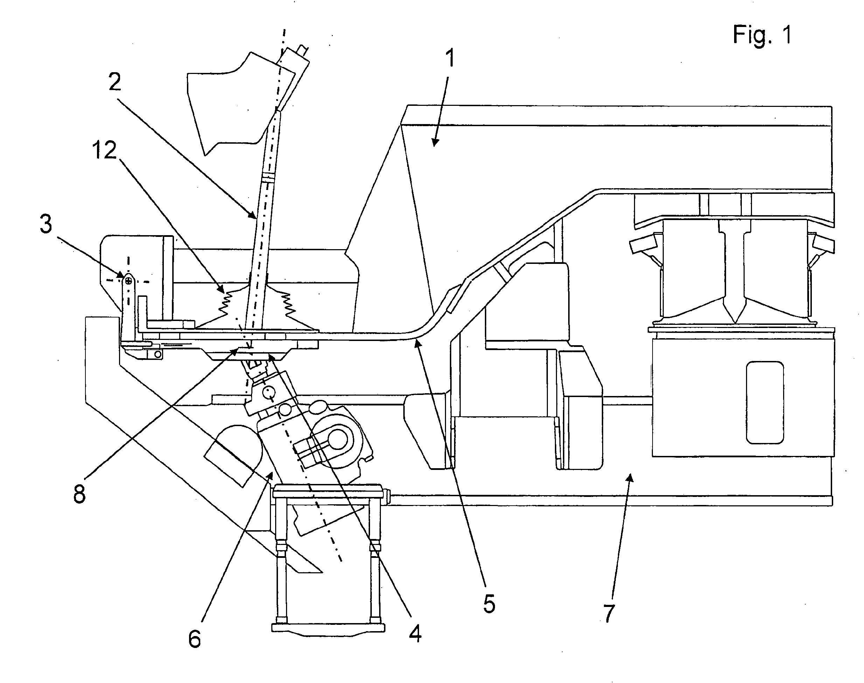

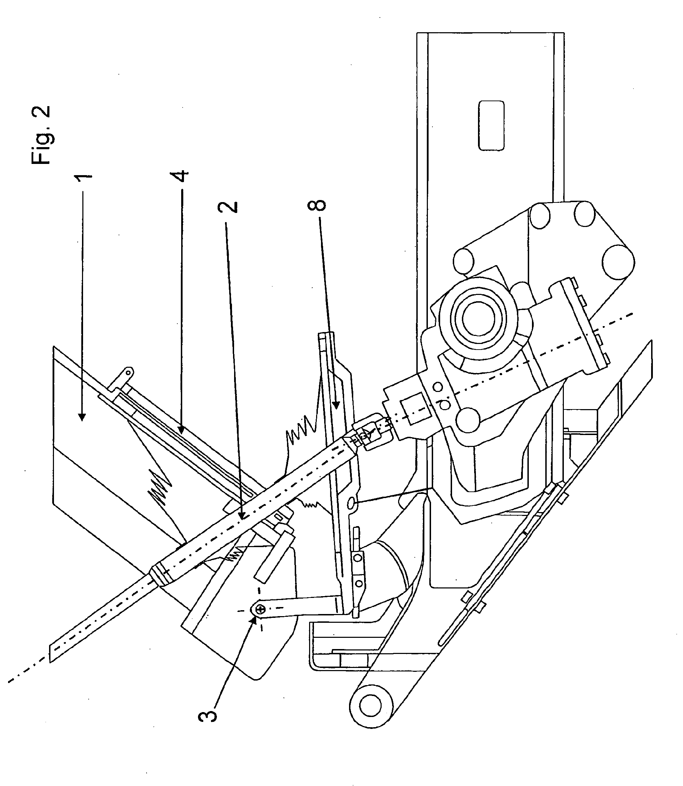

Fig. 1 zeigt die wesentlichen Baugruppen eines Fahrerhauses 1 eines nicht näher dargestellten Fahrzeuges und mit einer Lenksäule 2. Dieses Fahrerhaus 1 kann um einen Drehpunkt 3 gekippt werden. Im Fahrerhaus 1 ist unter anderem die Lenksäule 2 untergebracht, die durch eine Öffnung 4 im Fahrerhausboden 5 mit einem Lenkgetriebe 6 in bekannter Art und Weise (beispielsweise über ein Kreuzgelenk) verbunden ist. Die Lenksäule 2 selbst ist teleskopierbar. Das Lenkgetriebe 6 ist fest am Fahrzeugchassis 7 angebracht. Unterhalb des Fahrerhausbodens 5 ist zumindest im Bereich der Öffnung 4 eine Abdeckplatte 8 mit einer Durchführung 8.1 (Fig. 2) für die Lenksäule 2 eingebunden, die am Fahrerhausboden 5 mit diesem hermetisch abgeschlossen werden kann. Dazu weist der Fahrerhausboden 5 in diesem Bereich (bevorzugt jedoch um den der Öffnung 4) eine Rundumdichtung (nicht näher dargestellt) auf, die an der Abdeckplatte 8 im geschlossenen Zustand des Fahrerhauses 1 an dieser fest anliegt. Die Abdeckplatte 8 ist kein fester Bestandteil des Fahrerhausbodens 5.

Fig. 2 zeigt in einer Schnittdarstellung das Fahrerhaus 1 im gekippten Zustand. Die Lenksäule 2 hat die Bewegung bzw. den Weg mit dem Fahrerhaus 1 mitgemacht, während die Abdeckplatte 8 in ihrer ursprünglichen Lage verbleibt.

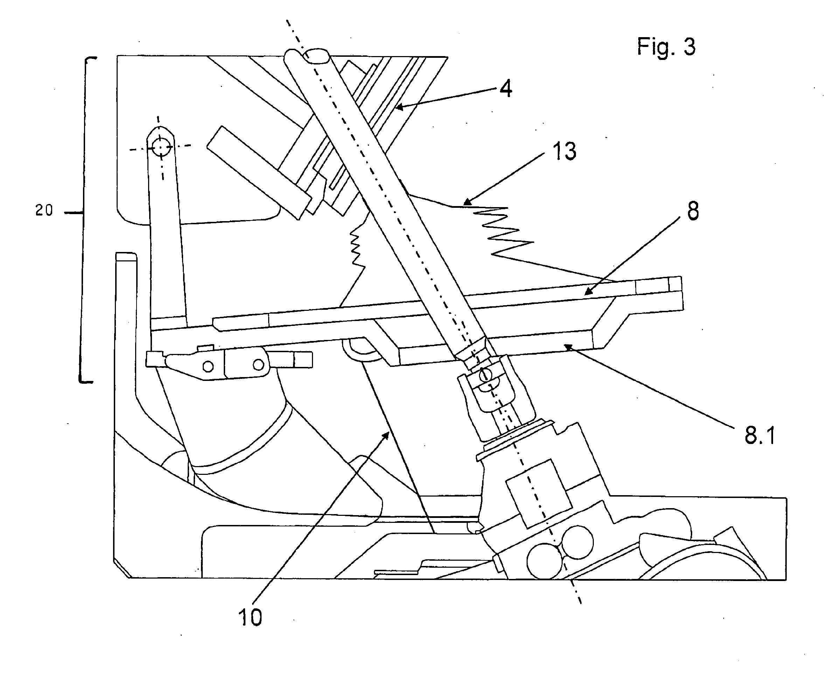

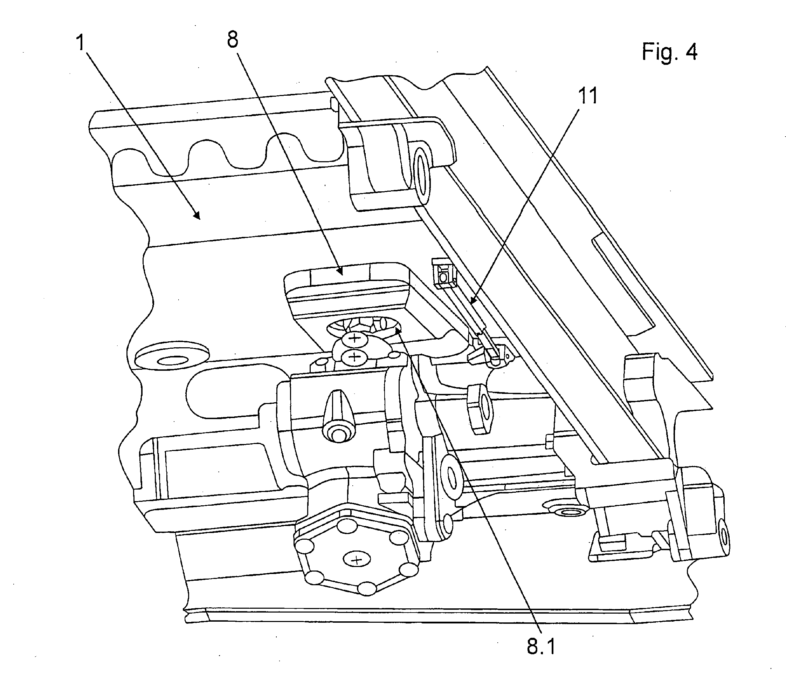

Fig. 3 zeigt den gekippten Zustand leicht vergrößert. In dieser Fig. ist mit 10 ein Seil (Drahtseil) gekennzeichnet, während in Fig. 4 eine Federeinheit 11 dargestellt ist.

Die Federeinheit 11, bevorzugt in Form einer Gasdruckfeder, drückt die Abdeckplatte 8 im geschlossenen Zustand unten gegen das Fahrerhaus 1 bzw. dessen Boden 5. Das Drahtseil 10 hingegen hat die Aufgabe, die Abdeckplatte 8 in ihrer ursprünglichen Lage zu halten, wenn das Fahrzeughaus 1 gekippt wird. Beide bilden somit das so genannte Stabilisierungssystem zum Halten der Abdeckplatte 8 in einer konstanten positionsstabilen Ebene oder Lage.

Die Lenksäule 2 besitzt über die gesamte Öffnung 4 gezogen einen inneren Faltenbalg 12, wie er herkömmlich bekannt ist. Zwischen diesem bzw. dem Fahrerhausboden 5 und der Abdeckplatte 8 ist vorrangig für den Schutz des inneren Faltenbalgs 12 um die Lenksäule 2 ein zweiter Faltenbalg 13 eingebunden, der dazu dient, Splitter, Restblast, Gase sowie Feuer abzuhalten. Dieser Faltenbalg 13 zeichnet sich dadurch aus, dass er Aramid verstärkt ist. Zumindest der zweite Faltenbalg 13 komplettiert den Lenksäulenschutz 20 gegenüber seiner Außenwelt.

Der Schutz des Fahrzeugs kann noch erhöht werden, wenn im Bereich vor dem Lenkgetriebe 6 ein zusätzliches Schutzblech (nicht näher dargestellt) eingebunden wird.

## Patentansprüche

1. Lenkungsdurchführung für eine Lenksäule (2), die durch eine Öffnung (4) eines Fahrerhausbodens (5) hindurch mit einem Lenkgetriebe (6) funktional verbunden ist, wobei unterhalb der Öffnung (4) eine gegenüber einem kippbaren Fahrerhaus (1) positionsstabile Abdeckplatte (8) mit einer Durchführung (8.1) für die Lenksäule (2) als Teil eines Lenksäulenschutzes (20) angeordnet ist, **dadurch gekennzeichnet, dass** die positionsstabile Abdeckplatte (8) beim Kippen des Fahrerhauses (1) nicht mit gekippt wird.

2. Lenkungsdurchführung nach Anspruch 1, **dadurch gekennzeichnet, dass** die Abdeckplatte (8) durch eine erste Federeinheit (11) gegen den Fahrerhausboden (5) gedrückt wird.

3. Lenkungsdurchführung nach Anspruch 1 oder 2, **dadurch gekennzeichnet, dass** die Abdeckplatte (8) beim Kippen des Fahrerhauses (1) durch eine zweite Federeinheit (10) in Position gehalten wird.

4. Lenkungsdurchführung nach Anspruch 2 und 3, **dadurch gekennzeichnet, dass** die erste Federeinheit (11) eine Gasdruckfeder ist und es sich bei der zweiten Federeinheit (10) um ein Drahtseil handelt.

5. Lenkungsdurchführung nach einem der Ansprüche 1 bis 4, **dadurch gekennzeichnet, dass** ein innerer Faltenbalg (12) über die gesamte Öffnung (4) und um die Lenksäule (2) gezogen oder angeordnet ist.

6. Lenkungsdurchführung nach einem der Ansprüche 1 bis 5, **dadurch gekennzeichnet, dass** zwischen der Abdeckplatte (8) und dem Freiraum in der Öffnung (4) des Fahrerhausbodens (5) ein zweiter Faltenbalg (13) um die Lenksäule (2) platziert ist.

7. Lenkungsdurchführung nach Anspruch 5 oder 6, **dadurch gekennzeichnet, dass** zumindest der zweite Faltenbalg (12) Aramid verstärkt ist.

8. Lenksäulenschutz für eine Lenksäule (2) eines kippbaren Fahrerhauses (1), die durch eine Öffnung (4) im Fahrerhausboden (5) mit einem feststehenden Lenkgetriebe (6) funktional verbunden ist, aufweisend
• eine, diese Öffnung (4) nach unten schließende, gegenüber dem Fahrerhausboden (5) positionsstabile Abdeckplatte (8) mit einer Lenksäulendurchführung (8.1),
• einem ersten Faltenbalg (12), der von oben gesehen über die gesamte Öffnung (4) um die Lenksäule (2) gezogen oder angeordnet ist,
• einem zweiten Faltenbalg (13), der in die Öffnung (4) ragend unterhalb des ersten Faltenbalgs (12) angeordnet an der Abdeckplatte (8) die Durchführung (8.1) abdichtend angebracht ist.

## Claims

1. Steering-column aperture for a steering column (2) which is functionally connected, through an opening (4) in a driver's cab floor (5), to a steering gear (6), wherein, below the opening (4), there is arranged a cover plate (8), which is positionally stable in relation to a tiltable driver's cab (1) and which has an aperture (8.1) for the steering column (2) as part of a steering column guard (20), **characterized in that**, when the driver's cab (1) is tilted, the positionally stable cover plate (8) is not tilted together therewith.

2. Steering-column aperture according to Claim 1, **characterized in that** the cover plate (8) is forced against the driver's cab floor (5) by a first spring unit (11).

3. Steering-column aperture according to Claim 1 or 2, **characterized in that** the cover plate (8) is held in position by a second spring unit (10) when the driver's cab (1) is tilted.

4. Steering-column aperture according to Claim 2 and 3, **characterized in that** the first spring unit (11) is a gas pressure spring and the second spring unit (10) is a wire cable.

5. Steering-column aperture according to one of Claims 1 to 4, **characterized in that** an inner corrugated bellows (12) is pulled or arranged across the entire opening (4) and around the steering column (2).

6. Steering-column aperture according to one of Claims 1 to 5, **characterized in that** a second corrugated bellows (13) is placed around the steering column (2) between the cover plate (8) and the free space in the opening (4) of the driver's cab floor (5).

7. Steering-column aperture according to Claim 5 or 6, **characterized in that** at least the second corrugated bellows (12) is reinforced with aramide.

8. Steering column guard for a steering column (2) of a tiltable driver's cab (1), which steering column is functionally connected to a static steering gear (6) through an opening (4) in the driver's cab floor (5), having
• a cover plate (8) which closes said opening (4) in a downward direction and which is positionally stable in relation to the driver's cab floor (5) and which has a steering-column aperture (8.1),
• a first corrugated bellows (12) which, as viewed from above, is pulled or arranged across the entire opening (4) around the steering column (2),
• a second corrugated bellows (13) which, arranged below the first corrugated bellows (12) so as to project into the opening (4), is mounted on the cover plate (8) so as to seal off the aperture (8.1).

## Revendications

1. Passage de direction pour une colonne de direction (2) qui est reliée fonctionnellement à un mécanisme de direction (6) à travers une ouverture (4) d'un plancher de cabine de conducteur (5), une plaque de recouvrement (8) de position stable par rapport à une cabine de conducteur basculante (1) et pourvue d'un passage (8.1) pour la colonne de direction (2) étant disposée en dessous de l'ouverture (4) en tant que partie d'une protection de colonne de direction (20), **caractérisé en ce que** la plaque de recouvrement (8) de position stable n'est pas basculée conjointement avec la cabine de conducteur (1) lors du basculement de celle-ci.

2. Passage de direction selon la revendication 1, **caractérisé en ce que** la plaque de recouvrement (8) est pressée contre le plancher de cabine de conducteur (5) par une première unité de ressort (11).

3. Passage de direction selon la revendication 1 ou 2, **caractérisé en ce que** la plaque de recouvrement (8) est maintenue en position par une deuxième unité de ressort (10) lors du basculement de la cabine de conducteur (1).

4. Passage de direction selon les revendications 2 et 3, **caractérisé en ce que** la première unité de ressort (11) est un ressort à pression de gaz et la deuxième unité de ressort (10) est un câble métallique.

5. Passage de direction selon l'une quelconque des revendications 1 à 4, **caractérisé en ce qu'**un soufflet plissé intérieur (12) est tiré ou disposé sur toute l'ouverture (4) et autour de la colonne de direction (2).

6. Passage de direction selon l'une quelconque des revendications 1 à 5, **caractérisé en ce qu'**un deuxième soufflet plissé (13) est placé autour de la colonne de direction (2) entre la plaque de recouvrement (8) et l'espace libre dans l'ouverture (4) du plancher de cabine de conducteur (5).

7. Passage de direction selon la revendication 5 ou 6, **caractérisé en ce qu'**au moins le deuxième soufflet plissé (12) est renforcé avec de l'aramide.

8. Protection de colonne de direction pour une colonne de direction (2) d'une cabine de conducteur basculante (1), laquelle colonne de direction est reliée fonctionnellement à un mécanisme de direction fixe (6) à travers une ouverture (4) dans le plancher de cabine de conducteur (5), comprenant
- une plaque de recouvrement (8), de position stable par rapport au plancher de cabine de conducteur (5) et fermant cette ouverture (4) vers le bas, comprenant un passage de colonne de direction (8.1),
- un premier soufflet plissé (12) qui, vu du dessus, est tiré ou disposé sur toute l'ouverture (4) autour de la colonne de direction (2),
- un deuxième soufflet plissé (13) qui est monté sur la plaque de recouvrement (8) de manière à fermer hermétiquement le passage (8.1) et est disposé en dessous du premier soufflet plissé (12) de manière à faire saillie dans l'ouverture (4).
